# FASCICULE DE BREVET EUROPEEN

(11) **EP 2 697 118 B1**
(45) Date de publication et mention de la délivrance du brevet: **20.07.2016**
(21) Numéro de dépôt: 12720237.2
(22) Date de dépôt: 30.03.2012
(51) Int. Cl.: B64D 27/26, F02C 7/20

(54) **PROCEDE DE MONTAGE D'UN MOTEUR D'AERONEF SUR UN PYLONE**
VERFAHREN ZUR MONTAGE EINES FLUGZEUGMOTORS AUF EINEN MAST
METHOD FOR MOUNTING AN AIRCRAFT ENGINE ON A PYLON

(30) Priorité: 14.04.2011 FR 1153251
(43) Date de publication de la demande: 19.02.2014
(73) Titulaire: SNECMA, 75015 Paris (FR)
(72) Inventeur: CHOUARD, Pierre-Alain, 77000 Melun (FR); BESNARD, Maryline, 77190 Dammarie les Lys (FR)
(74) Mandataire: Camus, Olivier Jean-Claude
(86) Numéro de dépôt international: PCT/FR2012/050686
(87) Numéro de publication internationale: WO 2012/172208

(56) Documents cités:
- FR-A1- 2 891 243
- FR-A1- 2 891 244
- FR-A1- 2 916 424
- FR-A1- 2 948 634

## Description

### DOMAINE TECHNIQUE DE L'INVENTION

La présente invention concerne un procédé de montage d'un moteur d'aéronef sur un pylône.

Le domaine technique de l'invention est, d'une façon générale, celui des moteurs d'aéronefs, et plus particulièrement celui de la fixation des moteurs sous des voilures d'aéronefs.

### ARRIERE PLAN TECHNOLOGIQUE DE L'INVENTION

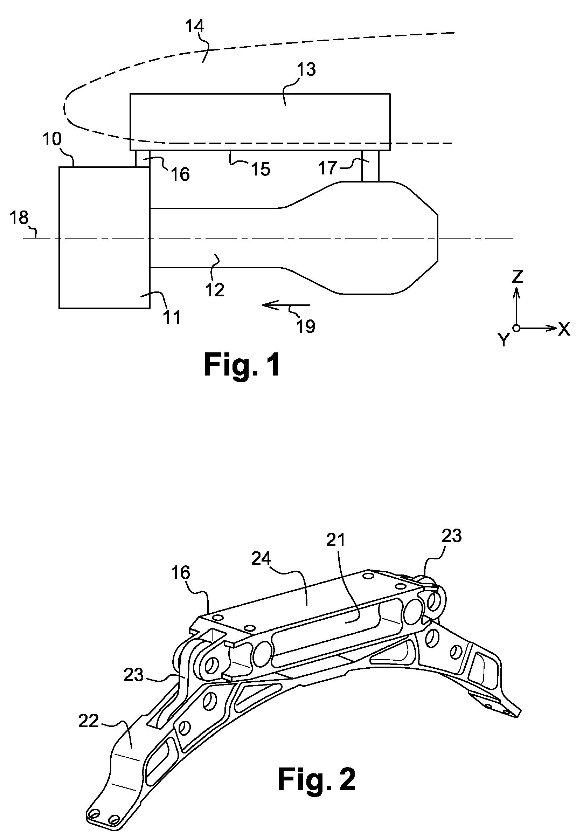

La figure 1 est une représentation schématique d'un moteur 10 d'aéronef fixé à un pylône 13, selon un premier moyen de fixation généralement pratiqué dans l'art antérieur. Dans la description qui suit, on appelle X la direction longitudinale du pylône 13, qui est également assimilable à la direction longitudinale du moteur 10, la direction X étant parallèle à un axe longitudinal 18 du moteur 10. D'autre part on appelle Y la direction orientée transversalement par rapport au pylône 13 et également assimilable à la direction transversale du moteur 10, et Z la direction verticale, ces trois directions X, Y et Z étant orthogonales entre elles. D'autre part, les termes « avant » et « arrière » sont à considérer par rapport à une direction d'avancement de l'aéronef rencontrée suite à une poussée exercée par le moteur 10, cette direction étant représentée schématiquement par une flèche 19. Le moteur 10 dispose à l'avant d'un carter de soufflante 11 de grande dimension, et comporte vers l'arrière un carter de turbine 12 de plus petite dimension. Le carter de soufflante 11 et le carter de turbine 12 sont bien entendu solidaires l'un de l'autre. Le carter de soufflante 11 est de forme cylindrique, ledit cylindre s'étendant selon l'axe X. Le pylône 13, aussi appelé mât d'accrochage, permet de suspendre le moteur 10 au-dessous d'une voilure 14 de l'aéronef. Le pylône 13 constitue en effet l'interface entre le moteur 10 et la voilure 14. Le pylône 13 permet également de transmettre à la structure de l'aéronef les efforts générés par le moteur 10, et autorise le cheminement de carburant, de systèmes électriques, hydrauliques, et pneumatiques entre le moteur 10 et l'aéronef. Le moteur 10 est muni d'un système de fixation du moteur 10 au pylône 13, interposé entre le moteur 10 et une face inférieure 15 du pylône 13. Le système de fixation comporte une attache moteur avant 16 et une attache moteur arrière 17. L'attache moteur avant 16 lie le carter de soufflante 11 à la face inférieure 15 du pylône 13, et l'attache moteur arrière 17 lie le carter de turbine 12 à la face inférieure 15 du pylône 13.

La figure 2 est une vue en perspective de l'attache moteur avant 16. L'attache moteur avant 16 comporte une poutre de suspension 21 reposant sur un porte-manteau 22, et lié à celui-ci par l'intermédiaire de biellettes articulées 23. La poutre de suspension 21 comporte une face supérieure 24 plane, destinée à être en contact et fixée via des boulons à la face inférieure 15 du pylône 13. Le porte-manteau 22 est de forme courbée pour épouser la forme cylindrique du carter de soufflante 11, et est fixé à celui-ci via des boulons.

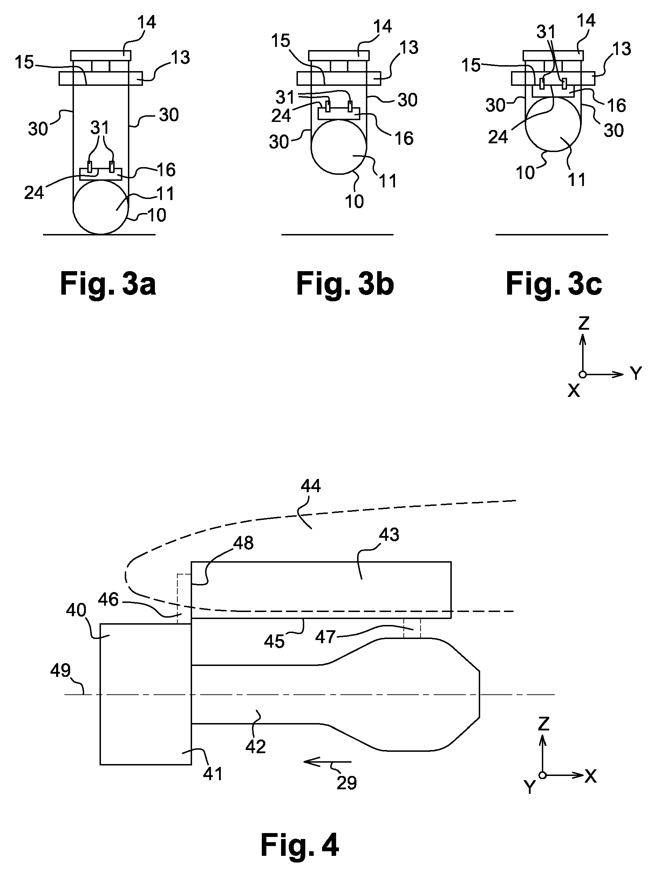

Les figures 3a, 3b et 3c représentent les différentes étapes de montage du moteur 10 sur le pylône 13, ledit pylône 13 étant accroché à la voilure 14. Les éléments desdites figures sont représentés selon un plan YZ. A la figure 3a, le moteur 10 repose sur le sol. L'attache moteur avant 16 est fixée au carter de soufflante 11 du moteur 10. Des harnais de hissage 30 sont accrochés d'une part à la voilure 14, et d'autre part au carter de soufflante 11. Le hissage vertical d'un moteur d'aéronef à l'aide de harnais de hissage est un procédé bien connu par l'homme du métier. A la figure 3b, le moteur 10 est en cours de hissage vertical par l'intermédiaire des harnais de hissage 30. A la figure 3c, la face supérieure 24 de l'attache moteur avant 16 est plaquée contre la face inférieure 15 du pylône 13, et fixée à celle-ci via des boulons 31.

Une telle fixation du moteur 10 sur le pylône 13 mène à un espace entre le moteur 10 et le pylône 13. La hauteur dudit espace est la hauteur de l'attache moteur avant 16, puisque la hauteur du carter de soufflante 11 est supérieure à la hauteur du carter de turbine 12. Or pour des raisons aérodynamiques, on cherche à rapprocher au maximum le moteur 10 du pylône 13. Ceci permet en effet de diminuer la traînée aérodynamique du pylône 13 et d'avoir des moteurs de diamètre FAN plus important.

Pour pallier cet inconvénient, on a proposé une solution, divulguée dans la demande de brevet FR 2 891 243. Cette demande décrit une attache moteur avant et un procédé de montage d'un moteur sur un pylône, tel que ladite attache moteur avant se fixe sur une face avant du pylône, et non plus sur une face inférieure du pylône. On peut ainsi diminuer l'espace entre le moteur et le pylône. Le procédé de montage divulgué consiste à hisser verticalement le moteur à l'aide de harnais de hissage, jusqu'à faire coïncider quatre orifices traversants pratiqués dans l'attache moteur avant, avec quatre percées pratiquées dans la face avant du pylône, puis d'insérer un pion de cisaillement dans chacune des ouvertures ainsi formées. L'attache moteur avant est donc fixée sur la face avant du pylône à l'aide de quatre pions de cisaillement et de boulons.

Cependant le procédé de montage ainsi décrit est compliqué car l'insertion d'un pion de cisaillement au travers d'un orifice de l'attache moteur avant, puis au travers d'une percée du pylône, demande une grande précision de positionnement de l'attache moteur avant vis-à-vis du pylône, d'autant plus qu'il faut renouveler l'opération quatre fois, pour chacun des quatre pions de cisaillement à insérer. Pour cette raison le temps de montage du moteur sur le pylône est important.

### DESCRIPTION GENERALE DE L'INVENTION

L'objet de l'invention offre une solution au problème qui vient d'être exposé, en proposant un procédé de montage d'un moteur d'aéronef sur un pylône par l'intermédiaire d'une attache moteur avant, ladite attache moteur avant se fixant sur une face avant dudit pylône via deux pions de cisaillement, lesdits deux pions de cisaillement étant préalablement insérés des orifices traversants de l'attache moteur avant ou bien dans des percées pratiquées sur la face avant du pylône. Pré-insérer les pions de cisaillement rend moins laborieuse la fixation de l'attache moteur avant sur la face avant du pylône.

Selon un premier aspect, l'invention concerne donc essentiellement un procédé de montage d'un moteur d'aéronef sur un pylône, caractérisé en ce qu'il comporte les étapes suivantes :
- mettre en place au moins un premier pion de cisaillement dans :
   - soit un premier orifice pratiqué dans une attache moteur avant, préalablement fixée sur le moteur à l'aide de biellettes,
   - soit une première percée pratiquée dans une face avant du pylône,
- pré-positionner l'ensemble comportant le moteur et l'attache moteur avant, par rapport au pylône en mettant le premier pion de cisaillement en regard d'une cavité réceptrice, ladite cavité réceptrice étant :
   - soit la première percée si le premier pion de cisaillement a été mis en place dans le premier orifice,
   - soit le premier orifice si le premier pion de cisaillement a été mis en place dans la première percée,
- insérer le premier pion de cisaillement dans la cavité réceptrice.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :
- l'étape de pré-positionnement du moteur par rapport au pylône comporte les sous-étapes suivantes :
   - hisser verticalement l'ensemble comportant le moteur et l'attache moteur avant,
   - positionner sensiblement parallèlement une partie supérieure de l'attache moteur avant et la face avant du pylône ;
- l'étape de pré-positionnement du moteur par rapport au pylône comporte une sous-étape supplémentaire entre la sous-étape de hissage et la sous-étape de positionnement, de décalage selon l'axe X et vers l'avant de l'ensemble comportant l'attache moteur avant et le moteur ;
- l'étape de pré-positionnement du moteur par rapport au pylône comporte une sous-étape supplémentaire avant la sous-étape de hissage, de mise en place d'au moins une cale au niveau d'au moins une des biellettes, pour maintenir en position l'attache moteur avant par rapport au moteur, selon un angle apte au hissage vertical effectué lors de la sous-étape de hissage, continument depuis le sol, jusqu'à ce que le premier pion de cisaillement se trouve sensiblement à la même hauteur que la cavité réceptrice ;
- l'étape de pré-positionnement du moteur par rapport au pylône comporte une sous-étape supplémentaire après la sous-étape de positionnement sensiblement parallèle, d'enlèvement de la au moins une cale ;
- la sous-étape de positionnement sensiblement parallèle est réalisée par basculement de l'attache moteur avant par rapport au moteur ;
- l'étape de fixation de l'attache moteur avant comporte une étape de vissage d'au moins une vis à travers un au moins un trou pratiqué sur l'attache moteur avant, dans une trouée pratiquée dans la face avant du pylône ;
- le procédé met en oeuvre deux pions de cisaillement ;
- chaque pion de cisaillement est dédoublé.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention. Les figures montrent :
- à la figure 1, déjà décrite, une représentation schématique d'un moteur 10 d'aéronef fixé à un pylône 13 via notamment une attache moteur avant 16, selon un premier moyen de fixation connu dans l'art antérieur ;
- à la figure 2, déjà décrite, une vue en perspective de l'attache moteur avant 16;
- aux figures 3a, 3b et 3c, déjà décrites, les étapes de montage du moteur 10 sur le pylône 13 ;
- à la figure 4, une représentation schématique d'un moteur 40 d'aéronef fixé à un pylône 43, selon l'invention ;
- aux figures 5 et 6, des représentations d'une attache moteur avant 46 utilisée dans le procédé de montage selon l'invention ;
- aux figures 7 à 9, une vue en perspective d'un pion de cisaillement utilisé dans le procédé de montage selon l'invention ;
- aux figures 10a à 10e, des étapes du procédé de montage du moteur 40 sur le pylône 43, selon un mode de réalisation de l'invention ;

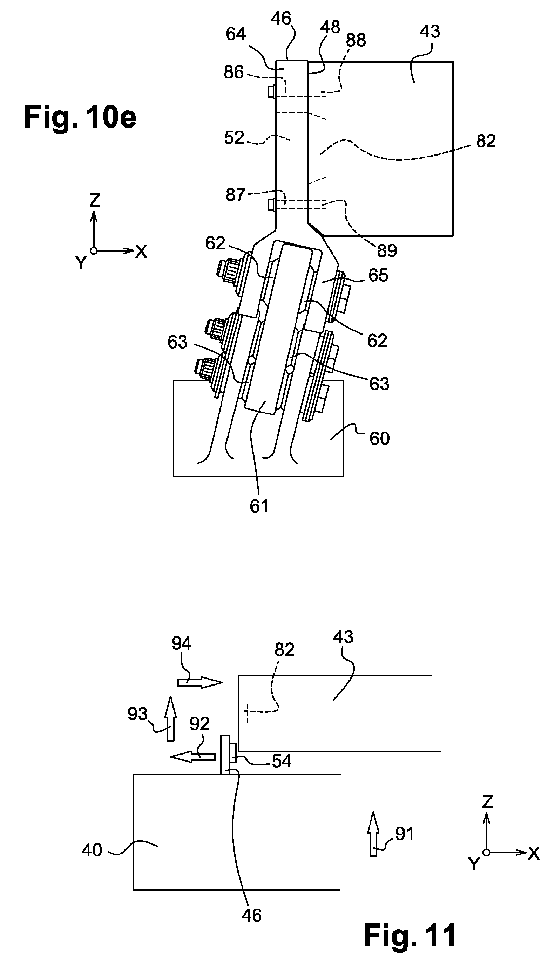

- à la figure 11, des étapes du procédé de montage du moteur 40 sur le pylône 43, selon un autre mode de réalisation de l'invention.

### DESCRIPTION DETAILLEE D'AU MOINS UN MODE DE REALISATION DE L'INVENTION

Sauf précision contraire, un même élément apparaissant sur des figures différentes présente une référence unique.

La figure 4 est une représentation schématique d'un moteur 40 d'aéronef fixé à un pylône 43, selon l'invention.

Dans toute la description qui suit, on appelle X la direction longitudinale du pylône 43, qui est également assimilable à la direction longitudinale du moteur 40, la direction X étant parallèle à un axe longitudinal 49 du moteur 40. D'autre part on appelle Y la direction orientée transversalement par rapport au pylône 43 et également assimilable à la direction transversale du moteur 40, et Z la direction verticale, ces trois directions X, Y et Z étant orthogonales entre elles. D'autre part, les termes « avant » et « arrière » sont à considérer par rapport à une direction d'avancement de l'aéronef rencontrée suite à une poussée exercée par le moteur 40, cette direction étant représentée schématiquement par une flèche 29.

Le pylône 43 est fixé à une voilure 44 de l'aéronef. Le moteur 40 comporte un carter de soufflante 41 et un carter de turbine 42. Le carter de soufflante 41 et le carter de turbine 42 sont solidaires l'un de l'autre. Le moteur 40 est muni d'un système de fixation du moteur 40 au pylône 43, comportant une attache moteur avant 46 et une attache moteur arrière 47. L'attache moteur avant 46 lie le carter de soufflante 11 à une face avant 48 du pylône 43, et l'attache moteur arrière 47 lie le carter de turbine 42 à une face inférieure 45 du pylône 43.

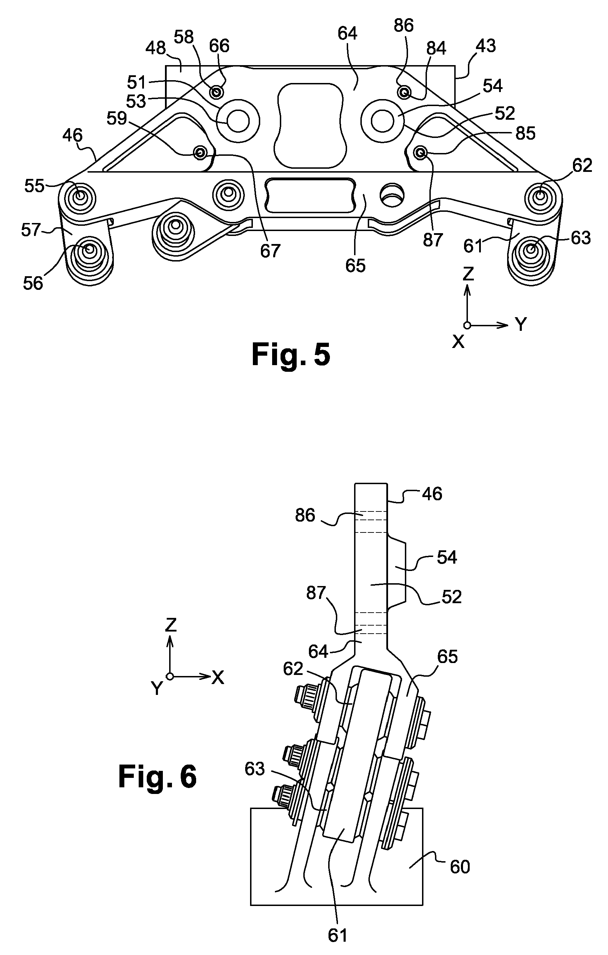

La figure 5 et la figure 6 représentent l'attache moteur avant 46 utilisée dans le procédé de montage selon l'invention. La figure 5 montre l'attache moteur avant selon un plan YZ contenant les axes Y et Z, fixée sur la face avant 48 du pylône 43. La figure 6 représente l'attache moteur avant 46 selon un plan XZ contenant les axes X et Z, liée à un porte-manteau 60, via un système de rotules et de biellettes expliqué plus loin. Le porte-manteau 60 est fixé solidairement au carter de soufflante 41 du moteur 40.

L'attache moteur avant 46 comporte une partie supérieure 64 et une partie inférieure 65. La partie supérieure 64 et la partie inférieure 65 s'étendent selon des plans inclinés l'un par rapport à l'autre. La partie supérieure 64 est destinée à être plaquée contre la face avant 48 du pylône 43, et fixée via un premier pion de cisaillement 53 et un deuxième pion de cisaillement 54. Une première vis 84, une deuxième vis 85, une troisième vis 58 et une quatrième vis 59 servent également à la fixation. Le premier pion de cisaillement 53 et le deuxième pion de cisaillement 54 sont représentés insérés dans respectivement un premier orifice 51 et un deuxième orifice 52 traversant l'attache moteur avant 46 selon la direction X. La première vis 84, la deuxième vis 85, la troisième vis 58 et la quatrième vis 59 sont représentées insérées dans respectivement un premier trou 86, un deuxième trou 87, un troisième trou 66, et un quatrième trou 67 traversant l'attache moteur avant 46 selon la direction X.

La partie inférieure 65 de l'attache moteur avant 46 comporte quatre biellettes et quatre paires de rotules. Chaque paire de rotules est associée à une biellette. Seulement trois paires de rotules et les trois biellettes associées sont représentées à la figure 5. Chaque paire de rotule comporte une rotule supérieure et une rotule inférieure. La rotule supérieure sert à lier l'attache moteur avant 46 à la biellette associée, et la rotule inférieure sert à lier la biellette associée au porte-manteau 60.

Une première biellette 57 est liée à l'attache moteur avant 46 via une première rotule supérieure 55, et liée au porte-manteau 60 via une première rotule inférieure 56. Une deuxième biellette 61 est liée à l'attache moteur avant 46 via une deuxième rotule supérieure 62, et liée au porte-manteau 60 via une deuxième rotule inférieure 63. Il en est de même pour les deux autres biellettes et les deux autres paires de rotules. Ce système de biellettes et de rotules permet d'articuler la partie supérieure 64 de l'attache moteur avant 46 par rapport au porte manteau 60. L'intérêt de cette articulation est expliqué plus loin.

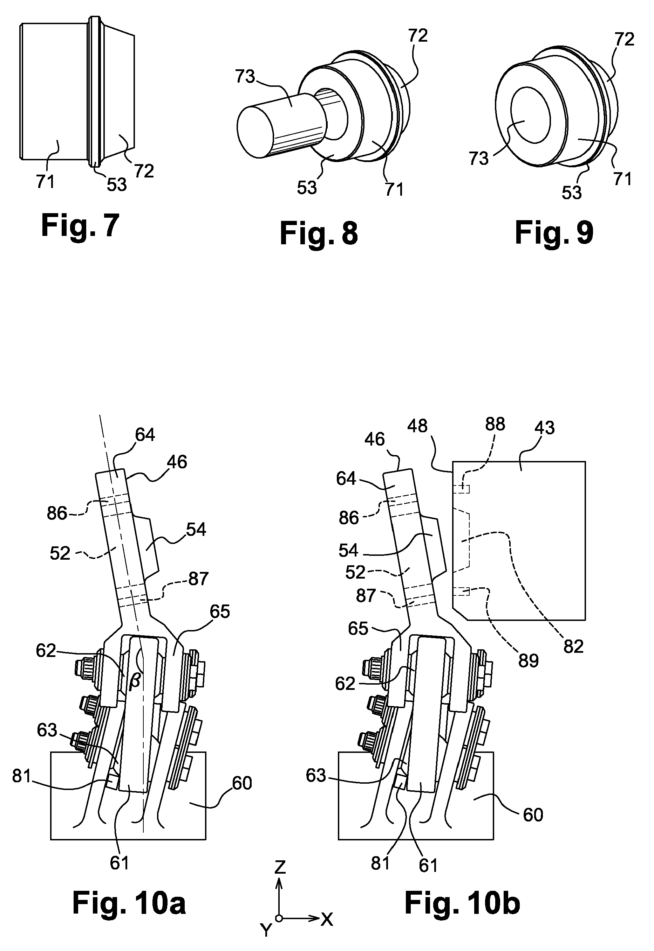

La figure 7 représente le premier pion de cisaillement 53. Le premier pion de cisaillement 53 comprend une partie cylindrique 71 destinée à être insérée et ajustée préalablement au montage, dans le premier orifice 51 de l'attache moteur avant 46. Le premier pion de cisaillement 53 comprend également une partie semi-conique 72 destinée à être insérée dans une première percée pratiquée dans la face avant 48 du pylône 43. La première percée est de forme semi-conique, complémentaire à la forme de la partie semi-conique 72 du premier pion de cisaillement 53. Ladite partie semi-conique 72 est réalisée de cette forme afin de faciliter le guidage du premier pion de cisaillement 53 lors de son insertion dans la première percée.

Avantageusement, comme le montrent les figures 8 et 9, le premier pion de cisaillement 53 est dédoublé, c'est-à-dire qu'il comporte un pion de cisaillement interne 73 de forme cylindrique, imbriqué dans la partie cylindrique 71. Le pion de cisaillement interne 73 est ajusté et serré dans la partie cylindrique 71, de sorte à empêcher un quelconque mouvement du pion de cisaillement interne 73 par rapport à la partie cylindrique 71. L'intérêt de dédoubler le premier pion de cisaillement 53 est d'assurer la fonction « Fail safe ». En cas d'une fissure de la partie cylindrique 71, cette fonction consiste à stopper la propagation de la fissure et à assurer le passage des chemins d'efforts, par l'intermédiaire du pion de cisaillement interne 73.

Le deuxième pion de cisaillement 54 est de forme identique au premier pion de cisaillement 53 : il comprend une partie cylindrique destinée à être insérée et ajustée préalablement au montage, dans le deuxième orifice 52 de l'attache moteur avant 46. Le deuxième pion de cisaillement 54 comprend également une partie semi-conique destinée à être insérée dans une deuxième percée 82, représentée à la figure 10b. La deuxième percée 82 est pratiquée dans la face avant 48 du pylône 43 et est de forme semi-conique, complémentaire à la forme de la partie semi-conique du deuxième pion de cisaillement 54. Avantageusement, le deuxième pion de cisaillement 54 est dédoublé.

Le premier pion de cisaillement 53 et le deuxième pion de cisaillement 54 étant insérés et ajustés préalablement au montage dans respectivement le premier orifice 51 et le deuxième orifice 52 de l'attache moteur avant 46, ils font saillie de l'attache moteur avant 46. Ainsi un montage du moteur 40 sur le pylône 43 par simple hissage vertical depuis le sol, comme pratiqué dans la solution connue, n'est pas possible. L'invention propose donc un procédé de montage particulier, qui est décrit ci-dessous.

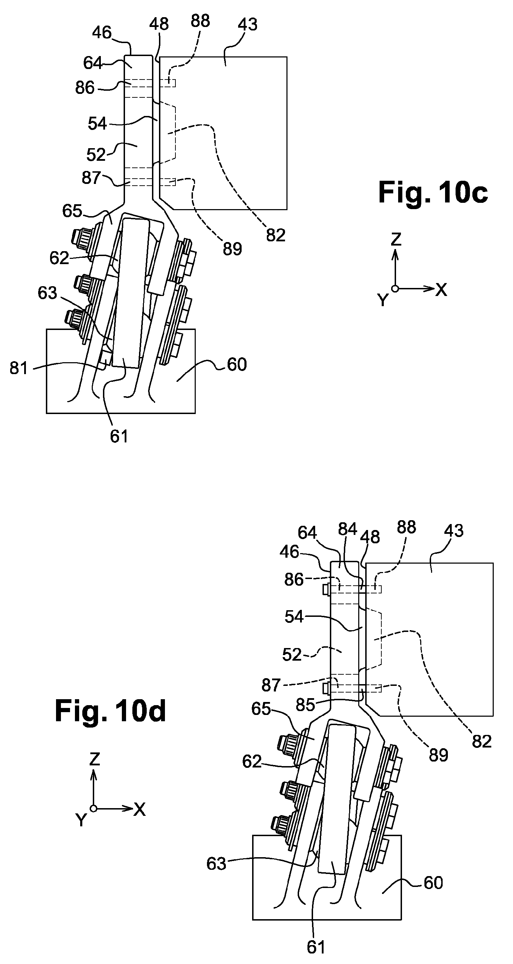

Les figures 10a à 10e illustrent les étapes de montage du procédé de montage du moteur 40 sur le pylône 43 selon un premier mode de réalisation de l'invention. Ces étapes sont les suivantes :
- représentée à la figure 10a : mise en place de quatre cales au niveau des quatre rotules inférieures, pour maintenir un angle d'inclinaison β entre la partie supérieure 64 de l'attache moteur avant 46 et le porte-manteau 60, ledit angle β étant déterminé de sorte à ce que les saillies du premier pion de cisaillement 53 et du deuxième pion de cisaillement 54 ne gênent pas lors d'un hissage vertical du moteur 40 par des harnais de hissage. Une cale 81 est représentée à la figure 10a, positionnée au niveau de la deuxième biellette 61 et de la deuxième rotule inférieure 63.
- représenté à la figure 10b : hissage vertical continu selon la direction Z, de l'ensemble comportant le moteur 40 et l'attache moteur avant 46, jusqu'à ce que le premier pion de cisaillement 53 se trouve sensiblement à la même hauteur que la première percée, et que le deuxième pion de cisaillement 54 se trouve sensiblement à la même hauteur que la deuxième percée 82. Le premier trou 86, le deuxième trou 87, le troisième trou 66 et le quatrième trou 67 se trouvent alors sensiblement à la même hauteur que respectivement une première trouée 88, une deuxième trouée 89, une troisième trouée et une quatrième trouée pratiquées dans la face avant 48 du pylône 43.
- représenté à la figure 10c : basculement de l'attache moteur avant 46 par rapport au porte-manteau 60, pour un positionnement sensiblement parallèle de la partie supérieure 64 de l'attache moteur avant 46 et de la face avant 48 du pylône 43.
- représenté à la figure 10d : insertion de la première vis 84, la deuxième vis 85, la troisième vis 58 et la quatrième vis 59 dans respectivement le premier trou 86, le deuxième trou 87, le troisième trou 66 et le quatrième trou 67 ; enlèvement des cales.
- représenté à la figure 10e :
   - rapprochement de la partie supérieure 64 de l'attache moteur avant 46 contre la face avant 48 du pylône 43 ;
   - insertion et ajustement du premier pion de cisaillement 53 et du deuxième pion de cisaillement 54 dans respectivement la première percée et la deuxième percée 82 ;
   - vissage de la première vis 84, de la deuxième vis 85, de la troisième vis 58 et de la quatrième vis 59 dans respectivement la première trouée 88, la deuxième trouée 89, une troisième trouée et une quatrième trouée. Les vis sont boulonnées dans des écrous prisonniers installés préalablement dans les trouées, ce qui permet l'ajustement des pions de cisaillement.

Selon un deuxième mode de réalisation de l'invention, le premier pion de cisaillement 53 et le deuxième pion de cisaillement 54 sont insérés et ajustés préalablement au montage, dans respectivement la première percée et la deuxième percée 82 du pylône 43, et non pas dans respectivement le premier orifice 51 et le deuxième orifice 52 de l'attache moteur avant 46. Dans ce cas, ce sont les parties cylindriques des pions de cisaillement qui sont préalablement insérées dans les percées.

Les étapes de montage du procédé de montage du moteur 40 sur le pylône 43 selon sont alors les suivantes :
- mise en place de quatre cales au niveau des quatre rotules inférieures, pour maintenir un angle d'inclinaison β entre la partie supérieure 64 de l'attache moteur avant 46 et le porte-manteau 60, ledit angle β étant déterminé de sorte à ce que les saillies du premier pion de cisaillement 53 et du deuxième pion de cisaillement 54 ne gênent pas lors d'un hissage vertical du moteur 40 par des harnais de hissage ;
- hissage vertical continu selon la direction Z, de l'ensemble comportant le moteur 40 et l'attache moteur avant 46, jusqu'à ce que le premier orifice 51 se trouve sensiblement à la même hauteur que le premier pion de cisaillement 53, et que le deuxième orifice 52 se trouve sensiblement à la même hauteur que le deuxième pion de cisaillement 54. Le premier trou 86, le deuxième trou 87, le troisième trou 66 et le quatrième trou 67 se trouvent alors sensiblement à la même hauteur que respectivement la première trouée 88, la deuxième trouée 89, la troisième trouée et la quatrième trouée.

- basculement de l'attache moteur avant 46 par rapport au porte-manteau 60, pour un positionnement sensiblement parallèle de la partie supérieure 64 de l'attache moteur avant 46 et de la face avant 48 du pylône 43.
- insertion de la première vis 84, la deuxième vis 85, la troisième vis 58 et la quatrième vis 59 dans respectivement le premier trou 86, le deuxième trou 87, le troisième trou 66 et le quatrième trou 67 ; enlèvement des cales.
- rapprochement de la partie supérieure 64 de l'attache moteur avant 46 contre la face avant 48 du pylône 43 ;
- insertion et ajustement du premier pion de cisaillement 53 et du deuxième pion de cisaillement 54 dans respectivement le premier orifice 51 et le deuxième orifice 52 ;
- vissage de la première vis 84, de la deuxième vis 85, de la troisième vis 58 et de la quatrième vis 59 dans respectivement la première trouée 88, la deuxième trouée 89, la troisième trouée et la quatrième trouée.

La figure 11 illustre les différentes étapes d'un troisième mode de réalisation du procédé de montage du moteur 40 sur le pylône 43 selon l'invention. Le troisième mode de réalisation n'utilise pas le système de rotules et de biellettes permettant d'articuler la partie supérieure 64 par rapport à la partie inférieure 65 de l'attache moteur avant 46. Cependant il nécessite un outillage au sol permettant un décalage du moteur 40 selon la direction X.

Dans le troisième mode de réalisation, le premier pion de cisaillement 53 et le deuxième pion de cisaillement 54 sont préalablement insérés et ajustés dans respectivement le premier orifice 51 et le deuxième orifice 52 traversant de l'attache moteur avant 46. Les étapes sont les suivantes :
- Etape 91 : Le moteur 40 est hissé verticalement, selon la direction Z, à l'aide de harnais de hissage ;
- Etape 92 : Le moteur 40 est décalé selon la direction X et vers l'avant. Ce décalage est nécessaire à cause des saillies du premier pion de cisaillement 53 et du deuxième pion de cisaillement 54.
- Etape 93 : Le moteur 40 est hissé à nouveau verticalement, selon la direction Z jusqu'à mettre le premier pion de cisaillement 53 en regard de la première percée, et le deuxième pion de cisaillement 54 en regard de la deuxième percée 82 ;
- Etape 94 :
   - La partie supérieure 64 de l'attache moteur avant 46 est rapprochée contre la face avant 48 du pylône 43 ;
   - Le premier pion de cisaillement 53 est inséré et ajusté dans la première percée, et le deuxième pion de cisaillement 54 est inséré et ajusté dans la deuxième percée 82 ;
   - Les vis sont insérées et vissées dans les trouées, ce qui permet l'ajustement des pions de cisaillement.

Selon un quatrième mode de réalisation du procédé de montage selon l'invention, le premier pion de cisaillement 53 et le deuxième pion de cisaillement 54 sont préalablement insérés et ajustés dans respectivement la première trouée et la deuxième trouée 82. Dans ce cas, les étapes du procédé sont les suivantes :
- Le moteur 40 est hissé verticalement, selon la direction Z, à l'aide de harnais de hissage ;
- Le moteur 40 est décalé selon la direction X et vers l'avant ;
- Le moteur 40 est hissé à nouveau verticalement, selon la direction Z jusqu'à mettre le premier pion de cisaillement 53 en regard du premier orifice 51, et le deuxième pion de cisaillement 54 en regard du deuxième orifice 52 ;

- La partie supérieure 64 de l'attache moteur avant 46 est rapprochée contre la face avant 48 du pylône 43 ;
- Le premier pion de cisaillement 53 est inséré et ajusté dans le premier orifice 51, et le deuxième pion de cisaillement 54 est inséré et ajusté dans le deuxième orifice 52 ;
- Les vis sont insérées et vissées dans les trouées, ce qui permet l'ajustement des pions de cisaillement.

## Revendications

1. Procédé de montage d'un moteur (40) d'aéronef sur un pylône (43), **caractérisé en ce qu'**il comporte les étapes suivantes :
- mettre en place au moins un premier pion de cisaillement (53) dans :
• soit un premier orifice (51) pratiqué dans une attache moteur avant (46), préalablement fixée sur le moteur (40) à l'aide de biellettes,
• soit une première percée pratiquée dans une face avant (48) du pylône (43),
- pré-positionner l'ensemble comportant le moteur (40) et l'attache moteur avant (46), par rapport au pylône (43) en mettant le premier pion de cisaillement (53) en regard d'une cavité réceptrice, ladite cavité réceptrice étant :
• soit la première percée si le premier pion de cisaillement (53) a été mis en place dans le premier orifice (51),
• soit le premier orifice (51) si le premier pion de cisaillement (53) a été mis en place dans la première percée,
- insérer le premier pion de cisaillement (53) dans la cavité réceptrice.

2. Procédé de montage d'un moteur (40) d'aéronef sur un pylône (43) selon la revendication précédente, **caractérisé en ce que** l'étape de pré-positionnement du moteur (40) par rapport au pylône (43) comporte les sous-étapes suivantes :
- hisser verticalement l'ensemble comportant le moteur (40) et l'attache moteur avant (46),
- positionner sensiblement parallèlement une partie supérieure (64) de l'attache moteur avant (46) et la face avant (48) du pylône (43).

3. Procédé de montage d'un moteur (40) d'aéronef sur un pylône (43) selon la revendication précédente, **caractérisé en ce que** l'étape de pré-positionnement du moteur (40) par rapport au pylône (43) comporte une sous-étape supplémentaire entre la sous-étape de hissage et la sous-étape de positionnement, de décalage vers l'avant de l'ensemble comportant l'attache moteur avant (46) et le moteur (40).

4. Procédé de montage d'un moteur (40) d'aéronef sur un pylône (43) selon la revendication 2, **caractérisé en ce que** l'étape de pré-positionnement du moteur (40) par rapport au pylône (43) comporte une sous-étape supplémentaire avant la sous-étape de hissage, de mise en place d'au moins une cale au niveau d'au moins une des biellettes, pour maintenir en position l'attache moteur avant (46) par rapport au moteur (40), selon un angle adapté au hissage vertical effectué lors de la sous-étape de hissage, continument depuis le sol, jusqu'à ce que le premier pion de cisaillement (53) se trouve sensiblement à la même hauteur que la cavité réceptrice.

5. Procédé de montage d'un moteur (40) d'aéronef sur un pylône (43) selon la revendication précédente, **caractérisé en ce que** l'étape d'insertion du premier pion de cisaillement (53) dans la cavité réceptrice comporte une sous-étape supplémentaire d'enlèvement de la au moins une cale.

6. Procédé de montage d'un moteur (40) d'aéronef sur un pylône (43) selon la revendication 2, 4 ou 5, **caractérisé en ce que** la sous-étape de positionnement sensiblement parallèle est réalisée par basculement de l'attache moteur avant (46) par rapport au moteur (40).

7. Procédé de montage d'un moteur (40) d'aéronef sur un pylône (43) selon l'une des revendications précédentes, **caractérisé en ce que** l'étape de fixation de l'attache moteur avant (46) comporte une étape de vissage d'au moins une vis à travers au moins un trou pratiqué sur l'attache moteur avant (46), dans une trouée pratiquée dans la face avant (48) du pylône (43).

8. Procédé de montage d'un moteur (40) d'aéronef sur un pylône (43) selon l'une des revendications précédentes, **caractérisé en ce que** le procédé met en oeuvre deux pions de cisaillement.

9. Procédé de montage d'un moteur (40) d'aéronef sur un pylône (43) selon l'une des revendications précédentes, **caractérisé en ce que** chaque pion de cisaillement est dédoublé.

## Patentansprüche

1. Montageverfahren eines Luftfahrzeugmotors (40) auf einer Pylone (43), **dadurch gekennzeichnet, dass** es die folgenden Schritte umfasst:
- Einsetzen wenigstens eines ersten Abscherklotzes (53) in:
• entweder eine erste Öffnung (51), die in einer vorderen Motorbefestigung (46) praktiziert ist, die zuvor mithilfe von Schaltgestängen auf dem Motor (40) befestigt wurde,
• oder eine erste Durchbohrung, die in einer vorderen Seite (48) der Pylone (43) praktiziert ist,
- Vorabpositionieren der Gruppe, die den Motor (40) und die vordere Motorbefestigung (46) im Verhältnis zur Pylone (43) umfasst, indem der erste Abscherklotz (53) gegenüber einer Aufnahmeausnehmung positioniert wird, wobei die genannte Aufnahmeausnehmung ist:
• entweder die erste Durchbohrung, wenn der erste Abscherklotz (53) in der ersten Öffnung (51) eingesetzt wurde,
• oder die erste Öffnung (51), wenn der erste Abscherklotz (53) in der ersten Durchbohrung eingesetzt wurde,
- Einfügen des ersten Abscherklotzes (53) in die genannte Aufnahmeausnehmung.

2. Montageverfahren eines Luftfahrzeugmotors (40) auf einer Pylone (43) gemäß dem voranstehenden Anspruch, **dadurch gekennzeichnet, dass** der Schritt der Vorab-Positionierung des Motors (40) im Verhältnis zur Pylone (43) die folgenden Unterschritte umfasst:
- vertikales Heben der den Motor (40) und die vordere Motorbefestigung (46) umfassenden Gruppe,
- deutliches paralleles Positionieren eines oberen Teils (64) der vorderen Motorbefestigung (46) der vorderen Seite (48) der Pylone (43).

3. Montageverfahren eines Luftfahrzeugmotors (40) auf einer Pylone (43) gemäß dem voranstehenden Anspruch, **dadurch gekennzeichnet, dass** der Schritt der Vorab-Positionierung des Motors (40) im Verhältnis zur Pylone (43) einen zusätzlichen Unterschritt zwischen dem Unterschritt des Hebens und dem Unterschritt der Positionierung, der Verschiebung der die vordere Motorbefestigung (46) und den Motor (40) umfassenden Gruppe nach vorn umfasst.

4. Montageverfahren eines Luftfahrzeugmotors (40) einer Pylone (43) gemäß Anspruch 2, **dadurch gekennzeichnet, dass** der Schritt der Vorab-Positionierung des Motors (40) im Verhältnis zur Pylone (43) einen zusätzlichen Unterschritt vor dem Unterschritt des Hebens, des Einsetzens wenigstens eines Keils an wenigstens einem der Schaltgestänge umfasst, um die vordere Motorbefestigung (46) im Verhältnis zum Motor (40) gemäß einem Winkel in Position zu halten, der zum vertikalen Heben geeignet ist, das beim Unterschritt des Hebens durchgeführt wird, kontinuierlich vom Boden, bis der erste Abscherklotz (53) sich deutlich in derselben Höhe befindet wie die Aufnahmeausnehmung.

5. Montageverfahren eines Luftfahrzeugmotors (40) einer Pylone (43) gemäß dem voranstehenden Anspruch, **dadurch gekennzeichnet, dass** der Schritt des Einführens des ersten Abscherklotzes (53) in die Aufnahmeausnehmung einen zusätzlichen Unterschritt des Entfernens des wenigstens einen Keils umfasst.

6. Montageverfahren eines Luftfahrzeugmotors (40) auf einer Pylone (43) gemäß Anspruch 2, 4 oder 5, **dadurch gekennzeichnet, dass** der Unterschritt der deutlich parallelen Positionierung per Kippen der vorderen Motorbefestigung (46) im Verhältnis zum Motor (40) realisiert ist.

7. Montageverfahren eines Luftfahrzeugmotors (40) auf einer Pylone (43) gemäß einem der voranstehenden Ansprüche, **dadurch gekennzeichnet, dass** der Schritt der Befestigung der vorderen Motorbefestigung (46) einen Verschraubungsschritt wenigstens einer Schraube durch wenigstens ein Loch umfasst, das auf der vorderen Motorbefestigung (46) in einer in der vorderen Seite (48) der Pylone (43) praktizierten Lücke praktiziert ist.

8. Montageverfahren eines Luftfahrzeugmotors (40) auf einer Pylone (43) gemäß einem der voranstehenden Ansprüche, **dadurch gekennzeichnet, dass** das Verfahren zwei Abscherklötze umsetzt.

9. Montageverfahren eines Luftfahrzeugmotors (40) auf einer Pylone (43) gemäß einem der voranstehenden Ansprüche, **dadurch gekennzeichnet, dass** jeder Abscherklotz verdoppelt ist.

## Claims

1. Method for mounting an aircraft engine (40) on a pylon (43), **characterised in that** it comprises the following steps:
- positioning at least a first shear pin (53) in:
• either in a first opening (51) provided in a front engine fastener (46), which is previously attached to the engine (40) using connecting rods,
• or in a first bore provided in a front surface (48) of the pylon (43),
- prepositioning the assembly comprising the engine (40) and the front engine fastener (46), relative to the pylon (43) by placing the first shear pin (53) opposite a receiving cavity, said receiving cavity being:
• either the first bore if the first shear pin (53) has been positioned in the first opening (51),
• or the first opening (51) if the first shear pin (53) has been positioned in the first bore,
- inserting the first shear pin (53) into the receiving cavity.

2. Method for mounting an aircraft engine (40) on a pylon (43) as claimed in the preceding claim, **characterised in that** the step of prepositioning the engine (40) relative to the pylon (43) comprises the following sub-steps:
- vertically hoisting the assembly comprising the engine (40) and the front engine fastener (46),
- positioning substantially parallel an upper portion (64) of the front engine fastener (46) and the front face (48) of the pylon (43).

3. Method for mounting an aircraft engine (40) on a pylon (43) as claimed in the preceding claim, **characterised in that** the step of prepositioning the engine (40) relative to the pylon (43) comprises an additional sub-step between the hoisting sub-step and the positioning sub-step, of shifting the assembly frontwards comprising the front engine fastener (46) and the engine (40).

4. Method for mounting an aircraft engine (40) on a pylon (43) according to claim 2, **characterised in that** the step of prepositioning the engine (40) relative to the pylon (43) comprises an additional sub-step before the sub-step of hoisting, of setting in place at least one wedge on at least one of the connecting rods, in order to maintain in position the front engine fastener (46) relative to the engine (40), according to an angle adapted to the vertical hoisting carried out during the sub-step of hoisting, continually from the ground, until the first shear pin (53) is located substantially at the same height as the receiving cavity.

5. Method for mounting an aircraft engine (40) on a pylon (43) as claimed in the preceding claim, **characterised in that** the step of inserting the first shear pin (53) into the receiving cavity comprises an additional sub-step of removing the at least one wedge.

6. Method for mounting an aircraft engine (40) on a pylon (43) according to claim 2, 4 or 5, **characterised in that** the sub-step of positioning substantially parallel is carried out via tipping the front engine fastener (46) relative to the engine (40).

7. Method for mounting an aircraft engine (40) on a pylon (43) according to one of the preceding claims, **characterised in that** the step of fastening the front motor fastener (46) comprises a step of screwing of at least one screw through at least one hole made on the front engine fastener (46), in a hole made in the front face (48) of the pylon (43).

8. Method for mounting an aircraft engine (40) on a pylon (43) according to one of the preceding claims, **characterised in that** the method implements two shear pins.

9. Method for mounting an aircraft engine (40) on a pylon (43) according to one of the preceding claims, **characterised in that** each shear pin is doubled.
